# EUROPÄISCHE PATENTANMELDUNG

(11) **EP 2 559 468 A1**
(43) Veröffentlichungstag der Anmeldung: **20.02.2013**
(21) Anmeldenummer: 12178938.2
(22) Anmeldetag: 02.08.2012
(51) Int. Cl.: B01D 35/153, B01D 35/16

(54) **Flüssigkeitsfilter, insbesondere Ölfilter**

(30) Priorität: 18.08.2011 DE 202011104690 U
(71) Anmelder: MAHLE International GmbH, 70376 Stuttgart (DE)
(72) Erfinder: Genc, Engin, 71332 Waiblingen (DE); Kiemlen, Ralf, 72760 Reutlingen (DE)
(74) Vertreter: BRP Renaud & Partner

(57) **Zusammenfassung**

Die Erfindung betrifft ein Flüssigkeitsfilter (1),
- mit einem Filtergehäuse (2), das einen Aufnahmeraum (3) für ein darin eingesetztes Ringfilterelement (4) enthält,
- mit einem durch Herausnehmen des Ringfilterelements (4) frei werdenden Leerlaufkanal (5), wobei an eine untere Endscheibe (6) des Ringfilterelements ein parallel zur Längsachse und exzentrisch abstehender Zapfen (7) angeformt ist,
- wobei am Boden des Aufnahmeraumes (3) eine Rampe (8) ausgebildet ist, die derart auf den Zapfen (7) abgestimmt ist, dass beim Einsetzen des Ringfilterelements (4) in das Filtergehäuse (2) der Zapfen (7) auf der Rampe (8) nach unten abgleitet und in die Öffnung des Leerlaufkanals (5) eindringt.

Erfindungswesentlich ist dabei, dass benachbart zu der Rampe (8) am Boden des Aufnahmeraums (3) zumindest eine als zumindest teilweise durchgängiger Boden ausgebildete Struktur (9) angeordnet ist, die ein funktionstüchtiges Einsetzen des Ringfilterelements (4) ausschließlich dann erlaubt, sofern das Ringfilterelement (4) mit seinem Zapfen (7) auf die Rampe (8) aufgesetzt wird und entlang dieser gleitet, bis der Zapfen (7) am unteren Ende der Rampe (8) in die Öffnung des Leerlaufkanals (5) eindringt.

## Beschreibung

Die Erfindung betrifft ein Flüssigkeitsfilter, insbesondere ein Ölfilter zum Reinigen von Schmieröl, insbesondere für Verbrennungsmotoren von Kraftfahrzeugen, mit den Merkmalen des Oberbegriffes des Anspruches 1. Die Erfindung betrifft außerdem ein Ringfilterelement für ein derartiges Flüssigkeitsfilter.

Aus der EP 1 229 985 B1 ist ein gattungsgemäßes Flüssigkeitsfilter mit einem im Einbauzustand im Wesentlichen stehend angeordneten Filtergehäuse bekannt, das einen Aufnahmeraum für ein darin eingesetztes Ringfilterelement zum Filtern einer Flüssigkeit enthält. Das Ringfilterelement ist dabei derart an das Filtergehäuse angepasst, dass es im Aufnahmeraum um seine Längsachse frei drehbar ist, solange ein axial und exzentrisch von der unteren Endscheibe des Ringfilterelements abstehender Zapfen nicht in eine Öffnung eines Leerlaufkanals eingreift. Am Boden des Aufnahmeraums ist dabei eine Rampe ausgebildet, die mit einem unteren Ende an der Öffnung des Leerlaufkanals am Boden beginnt und mit zunehmender Rampenlänge in das Innere des Aufnahmeraums vorstehend ansteigt. Beim Einsetzen des Ringfilterelements in das Filtergehäuse liegt der Zapfen (Pin) auf der Rampe auf und gleitet entlang dieser bei Drehung des Ringfilterelementes nach unten ab, wobei er am unteren Ende der Rampe in die Öffnung des Leerlaufkanals eindringt. Diese Ausführungsform erfordert die Verwendung eines ganz speziellen, nämlich eines einen solchen Zapfen aufweisenden Ringfilterelements, da bei der Verwendung herkömmlicher Ringfilterelemente ohne den Zapfen eine Kurzschlussverbindung zwischen dem Leerlaufkanal und dem Einlass bzw. dem Auslass vorhanden wäre und damit die Funktionsfähigkeit nicht mehr gegeben ist.

Die vorliegende Erfindung beschäftigt sich mit dem Problem, für einen Flüssigkeitsfilter der gattungsgemäßen Art eine verbesserte bzw. eine alternative Ausführungsform anzugeben, die insbesondere eine gesteigerte Robustheit und eine verbesserte Montagesicherheit für ein Ringfilterelement aufweist.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einem Flüssigkeitsfilter, insbesondere bei einem Ölfilter zum Reinigen von Schmieröl, insbesondere für Verbrennungsmotoren von Kraftfahrzeugen, wenigstens eine Struktur vorzusehen, die einen Falscheinbau eines Ringfilterelements verhindern und somit die für einen störungsfreien und langlebigen Betrieb erforderliche hohe Filterleistung gewährleisten kann und die das Filtergehäuse zusätzlich aussteift. Gelöst wird dieses Problem einerseits durch ein spezielles Schlüssel-Schloss-Prinzip, wobei das Ringfilterelement den Schlüssel in Form eines Zapfens und ein Filtergehäuse bzw. ein in diesem angeordneter Funktionsträger das zugehörige Schloss bilden und andererseits durch eine als zumindest teilweise durchgängiger Boden ausgebildete Struktur, die im Bereich des Filtergehäuses angeordnet ist und die dem erfindungsgemäßen Flüssigkeitsfilter die gesteigerte Robustheit verleiht sowie den Falscheinbau des Ringfilterelements verhindert. Das Filtergehäuse ist im Einbauzustand im Wesentlichen stehend angeordnet und enthält einen Aufnahmeraum für das darin eingesetzte Ringfilterelement zum Filtern der Flüssigkeit. Ebenso besitzt das Flüssigkeitsfilter einen Einlass für Rohflüssigkeit sowie einen Auslass für gereinigte Flüssigkeit sowie einen Leerlaufkanal, der durch ein Herausnehmen des Ringfilterelements geöffnet wird. An einer unteren Endscheibe des Ringfilterelementes ist hierfür der parallel zur Längsachse und exzentrisch abstehender Zapfen angeformt, der bei in das Filtergehäuse eingesetztem Ringfilterelement dichtend in eine Öffnung des Leerlaufkanals eindringt. Zusätzlich ist am Boden des Aufnahmeraums eine Rampe vorgesehen, die mit einem unteren Ende an der Öffnung des Leerlaufkanals am Boden beginnt und mit zunehmender Rampenlänge in das Innere des Ausnahmeraums vorstehend ansteigt, wobei die Rampe und der Zapfen so aufeinander abgestimmt sind, dass beim Einsetzen des Ringfilterelements in das Filtergehäuse der Zapfen - solange er noch nicht in die Öffnung des Leerlaufkanals eingedrungen ist - auf der Rampe aufliegt und bei Drehung des Ringfilterelementes nach unten entlang der Rampe abgleitet und am unteren Ende der Rampe in die Öffnung des Leerlaufkanals eindringt und diesen dadurch verschließt. Erfindungsgemäß ist nun benachbart zu der Rampe am Boden des Aufnahmeraums die zumindest eine als zumindest teilweise durchgängiger Boden ausgebildete Struktur angeordnet, die ein funktionstüchtiges Einsetzen des Ringfilterelements ausschließlich dann erlaubt, sofern das Ringfilterelement mit seinem Zapfen auf die Rampe aufgesetzt wird und entlang dieser gleitet, bis der Zapfen am unteren Ende der Rampe in die Öffnung des Leerlaufkanals eindringt und damit einen Falscheinbau verhindert. Eine derartige erfindungsgemäße Struktur erhöht aufgrund ihrer tellerartigen Ausbildung auch die Robustheit mit marginalem Mehraufwand, wodurch der Verbraucher ein deutlich verbessertes Flüssigkeitsfilter erhält.

Zweckmäßig wird die Struktur von der Rampe nur geringfügig, beispielsweise 0,1 bis 5,0 mm, überragt. Denkbar ist selbstverständlich auch eine Struktur, die höher ist als die eigentliche Rampe und dadurch eine Führungsgasse für den auf der Rampe gleitenden Zapfen bildet. Auch hierdurch können ein Verkanten oder Verklemmen und damit ein Falscheinbau des Ringfilterelements vermieden werden. Ebenso denkbar ist eine Struktur, die Ebenen gleich mit der Rampe ausgebildet ist. Bei der erfindungsgemäßen Struktur ist die Steigung der Rampe vergleichsweise gering, beispielsweise 1 mm auf 360°. Dies ermöglicht eine bauraumoptimierte Bauweise, wobei aufgrund des geringen Bauraumbedarfs der vergleichsweise flachen Rampe auch ein größeres Ringfilterelement mit größerer Filterfläche eingesetzt werden kann.

Bei einer vorteilhaften Weiterbildung der erfindungsgemäßen Lösung sind die Struktur und die Rampe am Filtergehäuse oder an einem Funktionsträger, der im Filtergehäuse eingesetzt wird, angeordnet. Dies soll zeigen, dass die erfindungsgemäße Rampe und die erfindungsgemäße Struktur nicht unbedingt zwangsläufig direkt am Filtergehäuse angeordnet werden müssen, sondern beispielsweise auch an einem Einsatzteil, nämlich dem Funktionsträger, welches dann im Filtergehäuse eingebaut wird.

Weitere wichtige Merkmale und Vorteile der erfindungsgemäßen Vorrichtung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Dabei zeigen, jeweils schematisch,
- Fig. 1: einen Längsschnitt durch ein Flüssigkeitsfilter in einem Bodenbereich mit einer erfindungsgemäßen Struktur,
- Fig. 2: einen Draufsicht auf die Struktur im Einbauzustand,
- Fig. 3: eine Schrägansicht auf die Struktur und die Rampe.

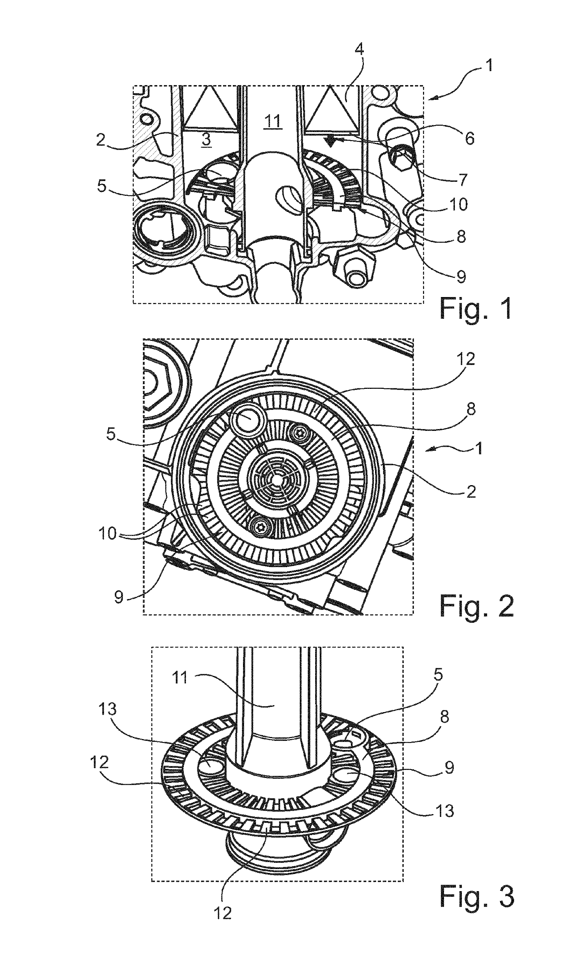

Entsprechend den Figuren 1 und 2, weist ein erfindungsgemäßes Flüssigkeitsfilter 1, welches insbesondere als Ölfilter zum Reinigen von Schmieröl, insbesondere für Verbrennungsmotoren in Kraftfahrzeugen ausgebildet ist, ein Filtergehäuse 2 mit einem Aufnahmeraum 3 auf, in welchem ein Ringfilterelement 4 (vgl. Fig. 1) zum Filtern einer Flüssigkeit eingesetzt ist. Selbstverständlich besitzt das Flüssigkeitsfilter 1 in bekannter Weise zusätzlich einen Einlass für die Rohflüssigkeit und einen Auslass für die gereinigte Flüssigkeit, ebenso wie einen durch Herausnehmen des Ringfilterelements 4 frei werdenden Leerlaufkanal 5, wobei an eine untere Endscheibe 6 des Ringfilterelementes 4 ein parallel zur Längsachse und exzentrisch abstehender Zapfen 7 angeformt ist (vgl. Fig. 1), der bei in das Filtergehäuse 2 eingesetztem Ringfilterelement 4 dichtend in eine Öffnung des Leerlaufkanals 5 eindringt. Am Boden Aufnahmeraums 3 ist zusätzlich eine Rampe 8 ausgebildet, die mit einem unteren Ende an der Öffnung des Leerlaufkanals 5 beginnt und mit zunehmender Rampenlänge in das Innere des Aufnahmeraums 3 vorstehend ansteigt. Die Rampe 8 und der Zapfen 7 sind dabei so aufeinander abgestimmt, dass beim Einsetzen des Ringfilterelementes 4 in das Filtergehäuse 2 der Zapfen 7 - solange er noch nicht in die Öffnung des Leerlaufkanals 5 eingedrungen ist - auf der Rampe 8 aufliegt und bei Drehung des Ringfilterelementes 4 um seine Längsachse nach unten abgleitet und am unteren Ende der Rampe 8 in die Öffnung des Leerlaufkanals 5 eindringt. Erfindungswesentlich ist nun, dass benachbart zu der Rampe 8 am Boden des Aufnahmeraums 3 zumindest eine als zumindest teilweise durchgängiger Boden ausgebildete Struktur 9 angeordnet ist, die ein funktionstüchtiges Einsetzen des Ringfilterelementes 4 ausschließlich dann erlaubt, sofern dieses mit seinem Zapfen 7 auf die Rampe 8 aufgesetzt wird und entlang dieser gleitet, bis der Zapfen 7 am unteren Ende der Rampe 8 in die Öffnung des Leerlaufkanals 5 eindringt und dadurch insbesondere einen Falscheinbau verhindert. Die bodenähnliche Struktur 9 kann dabei Bestandteil der Rampe 8 sein und ist somit integral mit dieser ausgebildet. Die Struktur 9 und die Rampe 8 können dabei entweder am Filtergehäuse 2 selbst oder an einem in dieses einsetzbaren Funktionsträger angeordnet sein (vgl. Fig. 3).

Die Struktur 9 kann dabei die Rampe 8 nach oben überragen, niedriger als diese oder Ebenen gleich mit dieser ausgebildet sein. Ist die Struktur 9 höher ausgebildet als die Rampe 8, so kann diese zusätzlich eine seitliche Führung für den auf der Rampe 8 entlanggleitenden Zapfen 7 des Ringfilterelementes 4 bilden. Vor allem die integrale Ausbildung der Struktur 9 als Bestandteil der Rampe 8 ermöglicht eine fertigungstechnisch günstige Herstellung.

Generell kann die Struktur 9 Rippen 10 aufweisen, die in Radialrichtung des Filtergehäuses 2 und damit orthogonal zur Rampe 8 verlaufen. Diese Rippen 10 können an ihrem äußeren Ende miteinander verbunden sein. Die Rippen 10 bilden dabei den Boden, der insbesondere ein Verkanten/Verklemmen eines von der Rampe abgerutschten Zapfens 7 verhindert. Der Boden und die Rippen 10 bzw. Strukturen 9 steifen insbesondere die Rampe 8 gegenüber dem Filtergehäuse 2 aus und machen das Filtergehäuse 2 im Bodenbereich insgesamt deutlich steifer. Mittels der Strukturen 9 können somit ein qualitativ hochwertiger Zusammenbau und eine positionsgenaue Montage des Ringfilterelementes 4 im Filtergehäuse 2 erreicht werden. Die einzelnen Rippen 10 der Struktur 9 weisen in Umfangsrichtung einen nahezu gleichgroßen Abstand auf, wobei sich der Umfangsabstand auch in Abwärtsrichtung der Rampe 8 verringern kann. Hierdurch ist insbesondere eine Aussteifung der Rampe 8 im Bereich des Leerlaufkanals 5 verbessert. Die beiderseits der Rampe 8 angeordneten und sich in Radialrichtung des Filtergehäuses 2 erstreckenden Rippen 10 können dabei die Rampe 8 auch nach oben überragen, wobei sie dann eine Ausnehmung aufweisen müssen, die so groß ist, dass der Zapfen 7 durch sie hindurch passt und die Rippen 10 somit eine Gasse für den Zapfen 7 bilden. Die bodenartige Struktur 9 gemäß den Darstellungen ist beispielsweise siebartig ausgebildet.

Die Struktur 9 liegt an ihrem äußeren Umfang vorzugsweise spielfrei an einer Innenwandung des Filtergehäuses 2 an. Das Filtergehäuse 2 ist üblicherweise ebenso wie das Ringfilterelement 4 im Wesentlichen stehend angeordnet, wobei unter einer stehenden Anordnung Abweichungen von einer Lotrechten von bis zu 40° verstanden werden können.

Betrachtet man die Fig. 2, so kann man zusätzlich erkennen, dass die Struktur 9 einstückig mit einem Standrohr 11 ausgebildet ist und zusammen mit diesem den weiter oben beschriebenen Funktionsträger bildet. Im Bereich der bodenförmigen Struktur 9, die eine Vielzahl von eine Durchströmung ermöglichenden Öffnungen 12 enthält, können auch Schrauböffnungen 13 vorgesehen sein (vgl. Fig. 3), über welche die Struktur 9 und zusammen mit dieser auch das Standrohr 11 am Filtergehäuse 2 festschraubbar sind.

Mit der zumindest einen am Boden des Aufnahmeraums 3 angeordneten Struktur 9 kann somit nicht nur die Steifigkeit im Bodenbereich des Filtergehäuses 2 gesteigert, sondern zugleich auch die Gefahr eines Falscheinbaus bzw. die Gefahr eines Verklemmens des Ringfilterelementes 4 bei der Montage reduziert werden.

## Patentansprüche

1. Flüssigkeitsfilter (1), insbesondere ein Ölfilter zum Reinigen von Schmieröl, insbesondere für Verbrennungsmotoren von Kraftfahrzeugen,
- mit einem Filtergehäuse (2), das einen Aufnahmeraum (3) für ein darin eingesetztes Ringfilterelement (4) zum Filtern einer Flüssigkeit enthält,
- mit einem Einlass für Rohflüssigkeit und einem Auslass für gereinigte Flüssigkeit,
- mit einem durch Herausnehmen des Ringfilterelements (4) frei werdenden Leerlaufkanal (5), wobei an eine untere Endscheibe (6) des Ringfilterelements ein parallel zur Längsachse und exzentrisch abstehender Zapfen (7) angeformt ist, der bei in das Filtergehäuse (2) eingesetztem Ringfilterelement (4) dichtend in eine Öffnung des Leerlaufkanals (5) eindringt,
- wobei am Boden des Aufnahmeraumes (3) eine Rampe (8) ausgebildet ist, die mit einem unteren Ende an der Öffnung des Leerlaufkanals (5) am Boden beginnt und mit zunehmender Rampenlänge in das Innere des Aufnahmeraumes (3) vorstehend ansteigt,
- wobei die Rampe (8) und der Zapfen (7) so aufeinander abgestimmt sind, dass beim Einsetzen des Ringfilterelements (4) in das Filtergehäuse (2) der Zapfen (7) - solange er noch nicht in die Öffnung des Leerlaufkanals (5) eingedrungen ist - auf der Rampe (8) aufliegt und bei Drehung des Ringfilterelements (4) um seine Längsachse nach unten abgleitet und am unteren Ende der Rampe (8) in die Öffnung des Leerlaufkanals (5) eindringt,
**dadurch gekennzeichnet,**
**dass** benachbart zu der Rampe (8) am Boden des Aufnahmeraums (3) zumindest eine als zumindest teilweise durchgängiger Boden ausgebildete Struktur (9) angeordnet ist, die ein funktionstüchtiges Einsetzen des Ringfilterelements (4) ausschließlich dann erlaubt, sofern das Ringfilterelement (4) mit seinem Zapfen (7) auf die Rampe (8) aufgesetzt wird und entlang dieser gleitet, bis der Zapfen (7) am unteren Ende der Rampe (8) in die Öffnung des Leerlaufkanals (5) eindringt.

2. Flüssigkeitsfilter nach Anspruch 1,
**dadurch gekennzeichnet,**
**dass** die Struktur (9) und/oder die Rampe (8) am Filtergehäuse (2) oder an einem Funktionsträger, der im Filtergehäuse (2) eingesetzt ist, angeordnet sind.

3. Flüssigkeitsfilter nach Anspruch 1 oder 2,
**dadurch gekennzeichnet,**
**dass** die Struktur (9) die Rampe (8) überragt oder niedriger als diese ausgebildet ist.

4. Flüssigkeitsfilter nach einem der Ansprüche 1 bis 3,
**dadurch gekennzeichnet,**
**dass** die Struktur (9) mehrere Rippen (10) aufweist.

5. Flüssigkeitsfilter nach Anspruch 4,
**dadurch gekennzeichnet,**
**dass** sich die Rippen (10) in Radialrichtung des Filtergehäuses (2) und damit orthogonal zur Rampe (8) erstrecken.

6. Flüssigkeitsfilter nach Anspruch 5,
**dadurch gekennzeichnet,**
**dass** sich ein Umfangsabstand der sich in Radialrichtung erstreckenden Rippen (10) in Abwärtsrichtung der Rampe (8) verringert.

7. Flüssigkeitsfilter nach einem der Ansprüche 4 bis 6,
**dadurch gekennzeichnet,**
**dass** die Rippen (10) an einem äußeren Rand miteinander verbunden sind.

8. Flüssigkeitsfilter nach einem der Ansprüche 1 bis 7,
**dadurch gekennzeichnet,**
**dass** die Struktur (9) Bestandteil der Rampe (8) ist.

9. Ringfilterelement (4) für ein Flüssigkeitsfilter (1) nach einem der vorhergehenden Ansprüche.
